Europäisches Patentamt

European Patent Office

Office européen des brevets

(11) Veröffentlichungsnummer: **0 216 748**
A1

(12) **EUROPÄISCHE PATENTANMELDUNG**

(21) Anmeldenummer: 86890199.2

(22) Anmeldetag: 07.07.86

(51) Int. Cl.⁴: **B 29 C 53/62**
**B 29 C 53/80**
**//F16F1/36**

(30) Priorität: 03.08.85 DE 3527964

(43) Veröffentlichungstag der Anmeldung:
**01.04.87 Patentblatt 87/14**

(84) Benannte Vertragsstaaten:
**AT CH DE FR GB IT LI NL SE**

(71) Anmelder: **BÖHLER AKTIENGESELLSCHAFT**
**Hansaallee 321**
**D-4000 Düsseldorf 11(DE)**

(72) Erfinder: **Götte, Timo, Dipl.-Ing.**
**Elfbuchenstrasse 22**
**D-3500 Kassel(DE)**

(72) Erfinder: **Hochbein, Helmut, Dipl.-Ing.**
**Am Wiperich 7**
**D-3540 Korbach(DE)**

(72) Erfinder: **Rau, Thomas, Dipl.-Ing.**
**Buttenstrasse 11**
**D-3528 liebenau/Niedermeiser(DE)**

(74) Vertreter: **Jellinek, Gerhard, Dr.**
**Vereinigte Edelstahiwerke AG (VEW) Elisabethstrasse 12**
**A-1010 Wien(AT)**

(54) Verfahren und Vorrichtung zur Herstellung von langgestreckten Körpern mit faserverstärktem Kunststoff.

(57) Die Erfindung betrifft ein Verfahren sowie eine Vorrichtung zur Herstellung von langgestreckten Körpern mit über ihre Länge, unterschiedlicher Höhe und/oder Breite, insbesondere bei in etwa gleichbleibender Querschnittsfläche, insbesondere Blattfedern, z.B. Hyperbelfedern, die mit faserverstärktem Kunststoff, z.B. Glas-, Kohlenstoff-, Aramidfasern od. dgl. aufgebaut sind, die sich im wesentlichen zumindest teilweise in und über die Längserstreckung des Körpers erstrecken, wobei eine Lage aus einer Vielzahl von insbesondere kunststoffimprägnierten Fasern auf einem Trägerkörper abgelegt, vorzugsweise auf einem Formkern aufgewickelt wird, wobei gegebenenfalls mehrere Lagen von einer Vielzahl von Fasern übereinander angeordnet werden, wobei zumindest eine Lage, vorzugsweise eine Vielzahl von Lagen vor dem Trägerkörper in ihrer Breite normal zur Längsrichtung der Vielzahl der Fasern und/oder relativen Winkellage bezogen auf die Längserstrekung des Körpers im wesentlichen entsprechend dem zu bildenden Abschnitt des Körpers geändert wird.

Fig. 2

EP 0 216 748 A1

Verfahren und Vorrichtung zur Herstellung
von langgestreckten Körpern mit faserverstärktem Kunststoff

Die Erfindung bezieht sich auf ein Verfahren zur Herstellung von langgestreckten Körpern mit über ihre Länge, unterschiedlicher Höhe und/
oder Breite bei insbesondere gleichbleibender Querschnittsfläche, insbesondere Blattfedern, z.B. Hyperbelfedern, die mit faserverstärktem
Kunststoff, z.B. Glas-, Kohlenstoff-, Aramidfasern od. dgl. aufgebaut
sind, sowie auf eine Vorrichtung zur Durchführung des Verfahrens.

Faserverstärkte Kunststoffkörper mit unidirektionaler
Anordnung der Fasern werden durch Wickeln der imprägnierten Fasern beispielsweise Glasfasern, Kohlenstofffasern, Aramidfasern, auf einem Formkörper oder auf bzw.
in einer Form hergestellt. In der Regel sind die Fasern
zu einem Faserverband sogenannten Rovings vereint, wobei mehrere Rovings gleichzeitig auf bzw. in die Form gewickelt werden. Dadurch ergibt sich zwangsweise, daß die Körper bezogen auf ihre Längserstreckung einen gleichbleibenden
Querschnitt aufweisen. Die Idealform für die Herstellung
ist eine rechteckige Form, die über ihren Querschnitt
in ihren Abmessungen erhalten bleibt. Sollen nun Körper
hergestellt werden, die in ihrer Breite und/oder Höhe
variieren, so kann einerseits die unidirektionale
Ausrichtung der Fasern nicht mit einer völligen Parallelität eingehalten werden, anderseits werden
die Fasern dadurch unregelmäßig orientiert, beispielsweise kommt es zu Lockerstellen, sodaß ein derartiger
Körper nicht die erwünschten Eigenschaften aufweist,
sondern diese Eigenschaften werden durch Inhomogenitätsstellen wesentlich beeinträchtigt. So wird aus der GB
A1 21 00 835 ein Verfahren zur Herstellung von Hyperbelfedern bekannt, bei welchem die Glasrovings von einer Aufnahme durch ein Harzbad hindurch geleitet werden, wonach die so imprägnierten Glasrovings auf einem Rahmen aufgewickelt werden. Nachdem eine genügend große Schichtdicke erreicht wurde, wird der Rahmen der Wickeleinrichtung entnommen, und gemeinsam mit den imprägnierten Glasfasern in eine Form eingebracht. Um eine gewisse Spannung der Glasfasern auch in der Form zu erhalten, weist der Rahmen Druckfedern auf, welche die Fasern in gespanntem Zustand halten sollen. Die Form weist im wesentlichen die Gestalt der zu bildenden Feder auf. Beim Einlegen der imprägnierten Glasfasern kommt es zu Quetschungen, unerwünschten Materialanhäufungen und dgl., wobei die Federn des Rahmens lediglich für eine straffe Orientierung jener Glasfasern Rechnung tragen können, die außermittig angeordnet sind, da bei diesen Glasfasern aufgrund der bogenförmigen Orientierung eine Verkürzung eintritt. Für die mittig angeordneten Glasfasern kann jedoch keine straffe Orientierung durchgeführt werden, da hier die ursprüngliche Länge beibehalten wird, wodurch der federnde Rahmen keine zusätzliche Ausrichtung bewirken kann, sondern schlaffe Fasern ermöglicht.

Die vorliegende Erfindung hat sich zum Ziel gesetzt, ein Verfahren und eine Vorrichtung zu schaffen, bei welchem eine exakte Orientierung der Fasern möglich ist, wobei gleichzeitig die Fasern jeweils bereits im wesentlichen in ihrer Endlage abgelegt werden, und wobei eine straffe Orientierung in stetiger Lage, also ohne Diskontinuitätsstellen, z.B. nicht in Faserlängsrichtung orientierte Krümmungen od. dgl. erhalten werden kann.

Das erfindungsgemäße Verfahren zur Herstellung von langgestreckten Körpern mit über ihre Länge unterschiedlicher Höhe und/oder Breite, insbesondere bei in etwa gleichbleibender Querschnittsfläche, insbesondere Blattfedern, z.B. Hyperbelfedern, die mit faserverstärktem Kunststoff, z.B. Glas-, Kohlenstoff-, Aramidfasern od. dgl. aufgebaut sind, die sich im wesentlichen zumindest teilweise in und über die Längserstreckung des Körpers erstrecken, wobei eine Vielzahl von, insbesondere kunststoffimprägnierten, Fasern auf einem Trägerkörper abgelegt, vorzugsweise auf einem Formkern aufgewickelt werden, wobei gegebenenfalls mehrere Lagen von einer Vielzahl von Fasern übereinander angeordnet werden, besteht im wesentlichen darin, daß zumindest eine Lage, vorzugsweise eine Vielzahl von Lagen vor dem Trägerkörper in ihrer Breite normal zur Längsrichtung der Vielzahl der Fasern und/oder relativen Winkellage bezogen auf die Längserstreckung des Körpers im wesentlichen entsprechend dem zu bildenden Abschnitt des Körpers geändert wird. Durch ein derartiges Verfahren wird sichergestellt, daß ein faserverstärkter Kunststoffkörper erhalten werden kann, bei welchem die Fasern in strenger Längsorientierung und/oder unter gleichmäßiger Spannung abgelegt werden, da die Fasern bereits vor dem Ablegen auf dem Trägerkörper in die erforderliche Orientierung, bezogen auf die Breite des Körpers, gebracht werden. Dadurch wird weiters erreicht, daß die einzelnen Fasern bzw. die einzelnen Rovings aus Fasern unter Spannung am Trägerkörper bzw. auf die bereits abgelegten kunststoffimprägnierten Fasern abgelegt werden. Auf diese Art und Weise ist ein besonders einfaches Ablege- bzw. Wickelverfahren realisiert, das beispielsweise über Mikroprozessoren oder auch mechanische Steuerungen gesteuert werden kann. Weiters besteht die Möglichkeit, daß beliebige Körper gefertigt werden können, ohne daß dadurch ein besonders hoher Aufwand erforderlich wird.

Gemäß einem weiteren Merkmal der vorliegenden Erfindung wird zumindest eine Lage über eine, insbesondere drehbare, Führung geleitet, deren relative Winkellage zum zu fertigenden Körper im wesentlichen entsprechend dem zu bildenden Abschnitt des Körpers geändert wird. Durch eine derartige Steuerung über die Winkellage ist der Verkürzung der Breite und der Erhöhung der Höhe auf besonders einfache Weise Rechnung getragen, wobei gleichzeitig die Fasern besonders gut geführt werden können.

Wird zumindest eine Lage über eine in ihrer Wirkbreite, bezogen auf den Körper, veränderbare Führung geleitet, so kann auf besonders einfache Art und Weise ein Zusammendrängen der abzulegenden Fasern erreicht werden, womit eine schichtenweise Ablage dieser mit homogener, d.h. im wesentlichen rechteckigen Form, wenn auch mit unterschiedlichem Querschnitt gewährleistet ist, wodurch eine besonders gute Geradeausrichtung und Parallelorientierung der Fasern erreichbar ist, welche sich beispielsweise durch besonders hohe Beanspruchbarkeit auszeichnen kann.

Eine besonders gleichmäßige Aneinanderreihung bzw. Orientierung einer Lage einer Vielzahl der Fasern ergibt sich dann, wenn die Lage auf der Führung durch eine Vielzahl über die Breite der Lage angeordneter Führungsorgane , insbesondere Stifte ,geleitet wird.

Werden die Lagen in einer Breite abgelegt, die der Gesamtbreite des jeweils zu bildenden Abschnittes entsprechen, so kann auch in den Randbereichen eine Bildung von Diskontinuitätsstellen vermieden werden. Werden die Vielzahl von Fasern vor der Führung mit einem aushärtbaren Kunststoff versehen, so ist eine besonders gute Führung der Fasern, insbesondere durch eine gegenseitige Orientierung derselben vor dem Ablegen auf dem Trägerkörper bereits realisiert, womit eine besonders exakte Lage gewährleistet ist.

Werden die Vielzahl der Fasern vor der Führung durch ein Tränkbad mit aushärtbarem Kunststoff geleitet, so kann eine besonders gute Imprägnierung der Fasern erreicht werden, wobei bei der Ablage der Fasern in der entsprechenden Orientierung ein besonders guter Verband der orientierten Fasern erreichbar ist.

Wird die Vielzahl der Fasern vor der Führung im wesentlichen zueinander parallel, z.B. über einen Führungskamm, orientiert, so kann die Führung für eine besonders exakte Ablage Sorge tragen, da die Parallelorientierung durch die Führung als solche nicht mehr durchgeführt werden muß. Um Körper verschiedener Breite zu bilden, können die Lagen durch mehrere Faserstränge gebildet werden.

Die erfindungsgemäße Vorrichtung zur Herstellung eines langgestreckten Körpers, insbesondere Federblattes, z.B. Hyperbelfederblattes, mit faserverstärktem Kunststoff, z.B. Glas-, Kohlenstoff-, Aramidfasern, die sich zumindest teilweise im wesentlichen in und über die Längserstreckung des Körpers erstrecken, mit zumindest einer, vorzugsweise drehbaren Aufnahme, für die Vielzahl von Fasern und einer Einfach- und/oder Mehrfachform, die gegebenenfalls um eine Querachse drehbar angeordnet ist, und zumindest einer Führung für die Fasern, die gegebenenfalls vor und/oder nach einem Kunstharzbad angeordnet ist/sind, besteht im wesentlichen darin, daß zumindest eine Führung vorgesehen ist, die unmittelbar vor der

**0216748**

Form angeordnet ist, welche in ihrer Winkellage bezogen auf die Form und/oder ihrer Führungsbreite bezogen auf die Form veränderbar ist. Eine derartige Vorrichtung kann besonders einfach ausgebildet werden, wobei gleichzeitig eine Steuerung, z.B. eine elektronische Steuerung, synchron zur Bewegung der Form auf einfachste Weise vorgesehen werden kann. Weiters ist eine besonders gute Orientierung der Fasern gewährleistet.

Weist die Führung eine Vielzahl von Führungsorganen, z. B. Führungsstifte auf, welche zu den Fasern weisen, so ist eine besonders gute Führung der Fasern gegeben, wobei ein Zusammendrängen der Fasern, z.B. im Außenbereich auf besonders einfache Art und Weise vermieden wird.

Ist die Führung um eine Achse, die normal zur Längserstreckung des Körpers angeordnet ist, drehbar, so kann auf besonders einfache Weise die Wirkbreite der Führung geändert werden.

Ist die Führung mit zumindest zwei Teilen aufgebaut, die um einen gemeinsamen Drehpunkt bzw. Achse, zueinander bzw. auseinander bewegbar sind, so kann auf besonders einfache Weise die Führung in ihrer Wirkbreite geändert werden.

Ist die Führung in ihrer Winkellage bezogen auf die Grundfläche der Form veränderbar, so wird über die Winkellagenveränderung eine Veränderung der Ablagebreite auf besonders einfache Weise erreicht, da lediglich die Führung, die beispielsweise an einem starren Teil angelenkt ist, gedreht werden muß.

Im folgenden wird die Erfindung anhand der Zeichnungen näher erläutert.

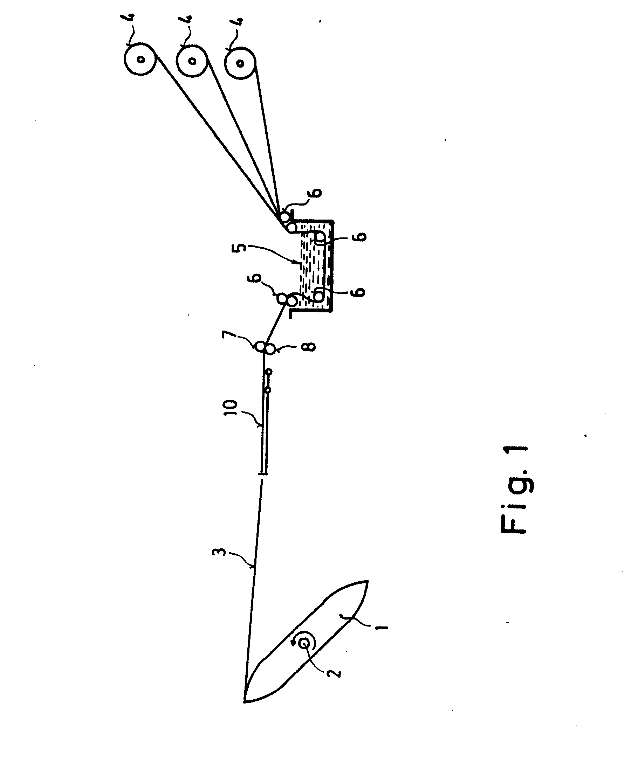

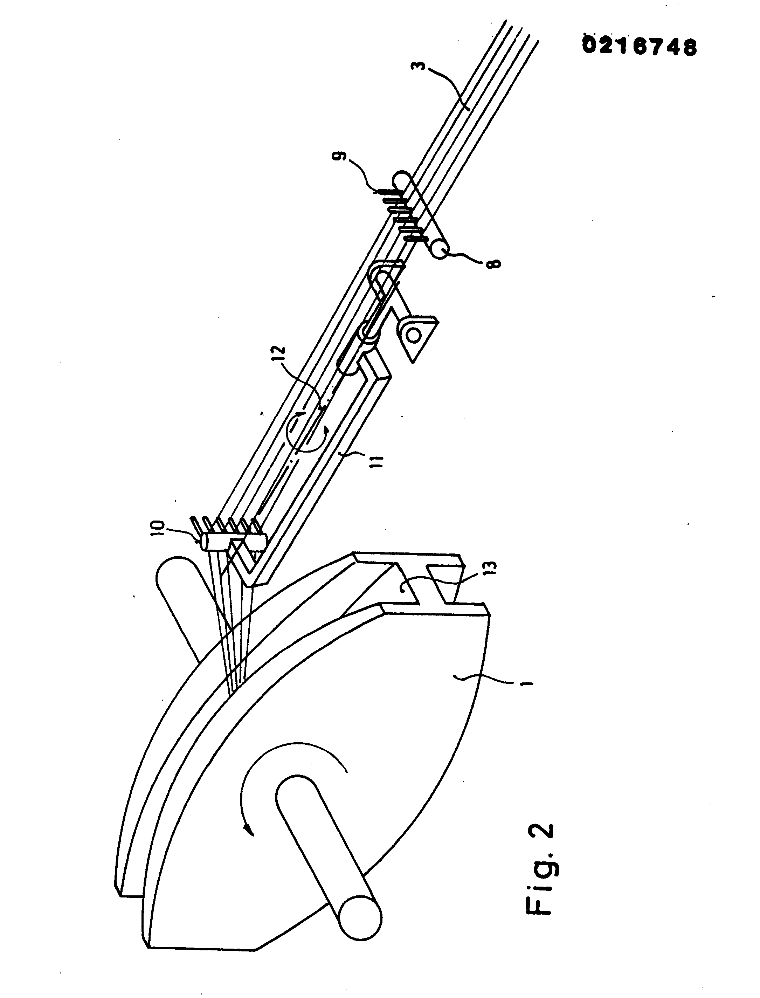

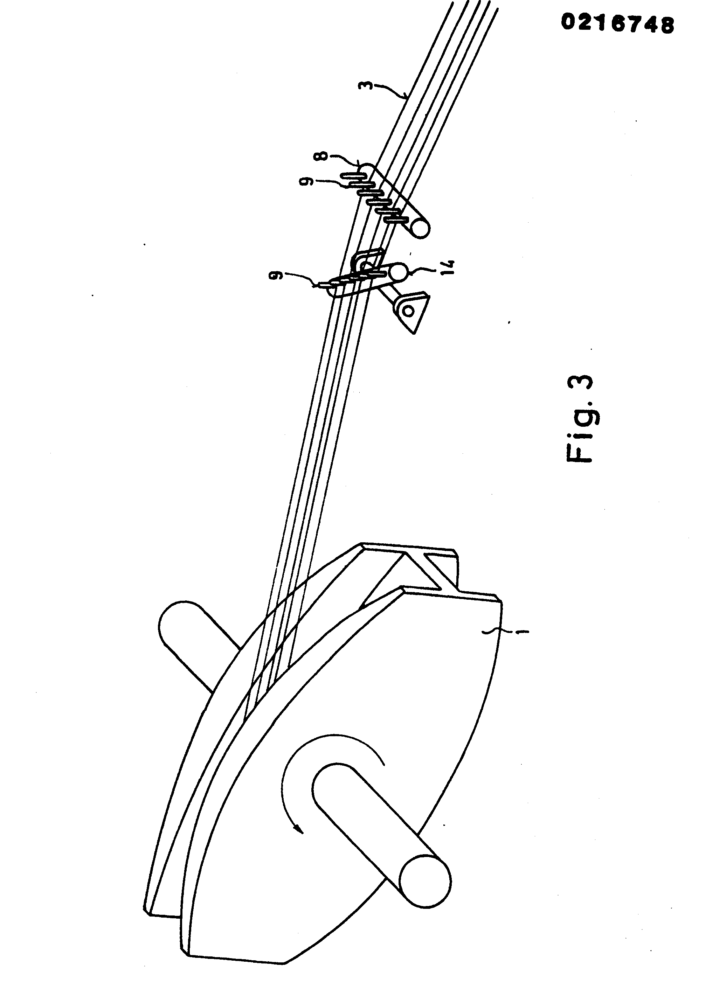

Es zeigen Fig. 1 in schematischer Darstellung eine Wickelvorrichtung und die Fig. 2 und 3 Führungen für eine Wickelvorrichtung gemäß Fig. 1.

Die in Fig. 1 schematisch dargestellte Anlage weist eine Form 1 auf, welche um die Achse 2 gedreht wird. Durch diese Drehbewegung werden die Glasfasern 3 auf die Form aufgewickelt. Die Glasfasern werden hiebei von den Rovingspulen 4 abgewickelt. Diese Spulen sind so gelagert, daß beim Abziehen der Glasfaserrovings ein Drehwiderstand entgegengesetzt wird, womit eine Straffung der Fasern erreicht wird. Die Fasern werden sodann durch ein Kunstharzbad 5 über Führungsrollen 6 geleitet. Diese Führungsrollen 6 haben weiters die Aufgabe, einen Überschuß von Kunstharz beim Ausleiten aus dem Kunstharzbad abzustreifen. Sodann werden die Glasfaserstränge über die Führung 7 geleitet, welche für eine parallele Ausrichtung der Fasern Sorge trägt. Zwischen der Form 1 und der Führung 7 ist eine weitere Führung 8 vorgesehen, die näher in den Fig. 2 und 3 dargestellt ist. Wie der Fig. 2 entnehmbar, weist die Führung 8 Stifte 9 auf, die zur Parallelausrichtung der einzelnen Faserstränge 3 dienen. Die Faserstränge 3 werden sodann der Führung 10 zugeführt, welche auf einem Arm 11 angeordnet ist, der um eine Achse 12 drehbar angeordnet ist, sodaß die Winkellage der Führung 10 bezogen auf die Grundfläche 13 der Form 1 verändert werden kann. Ist die Führung 10 parallel zur Führung 8 angeordnet, so werden die Faserstränge in ihrer vollen Breite abgelegt. Je größer die Neigung der Führung 10 zur Führung 8, und damit auch zur Grundfläche 13, ist, umso geringer ist die Breitenerstreckung der abgelegten Glasfaserlagen.

Wie den Fig. 2 und 3 besonders deutlich zu entnehmen, dient die Form zur Herstellung einer Hyperbelfeder, also einem Federblatt, das an seinen beiden Enden breiter ausgebildet ist, als in seinem Mittelbereich, wobei allerdings die Höhe der Feder wieder im Mittelbereich größer ist, als in den beiden Endbereichen.

Bei der in Fig. 3 dargestellten Führung für die Fasern 3 ist wieder eine Führung 8 mit Stiften 9 vorgesehen, die für die parallele Ausrichtung der einzelnen Faserstränge Rechnung trägt, wobei zwischen Form 1 und dieser Führung eine weitere Führung 14 vorgesehen ist, die um eine Achse, die normal zur Ebene der Faserstränge angeordnet ist, drehbar ist. Durch diese Drehbewegung kann die Wirkbreite der Führung verändert werden. Je größer der Winkel ist, welcher von den beiden Führungen 14 und 8 miteinander eingeschlossen wird, umso geringer ist die Breite der Lagen, welche auf die Form aufgewickelt werden. Anstelle dieser Führung 14 können auch zwei aneinander angelenkte Führungen vorgesehen sein, die in Form einer Schere ausgebildet sind, welche wieder Führungsstifte tragen kann, sodaß auch eine Verbreiterung der Faserstränge gegenüber der Breite in der Führung 8 erreichbar ist.

0216748

Patentansprüche :

1. Verfahren zur Herstellung von langgestreckten Körpern mit über ihre Länge, unterschiedlicher Höhe und/oder Breite, insbesondere bei in etwa gleichbleibender Querschnittsfläche, insbesondere Blattfedern, z.B. Hyperbelfedern, die mit faserverstärktem Kunststoff, z.B. Glas-, Kohlenstoff-, Aramidfasern od. dgl. aufgebaut sind, die sich im wesentlichen zumindest teilweise in und über die Längserstrekkung des Körpers erstrecken, wobei eine Lage aus einer Vielzahl von insbesondere kunststoffimprägnierten Fasern auf einem Trägerkörper abgelegt, vorzugsweise auf einem Formkern aufgewickelt wird, wobei gegebenenfalls mehrere Lagen von einer Vielzahl von Fasern übereinander angeordnet werden, dadurch gekennzeichnet, daß zumindest eine Lage, vorzugsweise eine Vielzahl von Lagen vor dem Trägerkörper in ihrer Breite normal zur Längsrichtung der Vielzahl der Fasern und/oder relativen Winkellage bezogen auf die Längserstreckung des Körpers im wesentlichen entsprechend dem zu bildenden Abschnitt des Körpers geändert wird.

2. Verfahren nach Anspruch 1, dadurch gekennzeichnet, daß zumindest eine Lage über eine, insbesondere schwenkbare Führung geleitet wird, deren relative Winkellage zum zu fertigenden Körper im wesentlichen entsprechend dem zu bildenden Abschnitt des Körpers geändert wird.

3. Verfahren nach Anspruch 1 oder 2, dadurch gekennzeichnet, daß zumindest eine Lage über eine in ihrer Wirkbreite, bezogen auf den Körper, veränderbare Führung geleitet wird.

4. Verfahren nach Anspruch 1 oder 2, dadurch gekennzeichnet, daß die Lage auf der Führung durch eine Vielzahl über die Breite der Lage angeordneter Führungsorgane, insbesondere Stifte, geleitet wird.

5. Verfahren nach einem der Ansprüche 1 bis 4, dadurch gekennzeichnet, daß die Lagen in einer Breite abgelegt werden, die der Gesamtbreite des jeweils zu bildenden Abschnittes entsprechen.

6. Verfahren nach einem der Ansprüche 1 bis 5, dadurch gekennzeichnet, daß die Vielzahl der Fasern vor der Führung mit einem aushärtbaren Kunststoff versehen werden.

7. Verfahren nach Anspruch 6, dadurch gekennzeichnet, daß die Vielzahl der Fasern vor der Führung durch ein Tränkbad mit aushärtbarem Kunststoff geleitet werden.

8. Verfahren nach einem der Ansprüche 1 bis 7, dadurch gekennzeichnet, daß die Vielzahl der Fasern vor der Führung im wesentlichen parallel zueinander, z.B. über einen Führungskamm, orientiert werden.

9. Verfahren nach einem der Ansprüche 1 bis 8, dadurch gekennzeichnet, daß die Lagen durch mehrere Faserstränge gebildet werden.

10. Vorrichtung zur Herstellung eines langgestreckten Körpers, insbesondere Federblattes, z.B. Hyperbelfederblattes, mit faserverstärktem Kunststoff, z.B. Glas-, Kohlenstoff-, Aramidfasern od. dgl., die sich zumindest teilweise im wesentlichen in und über die Längserstreckung des Körpers erstrecken, mit zumindest einer, vorzugsweise drehbaren Aufnahme für die Vielzahl von Fasern und einer Einfachoder Mehrfachform, die gegebenenfalls um eine Querachse drehbar angeordnet ist, und zumindest einer Führung für die Fasern, die gegebenenfalls vor und/oder nach einem Kunstharzbad angeordnet ist/sind, dadurch gekennzeichnet, daß zumindest eine Führung (10, 14) vorgesehen ist, die unmittelbar vor der Form (1) angeordnet ist, welche in ihrer Winkellage, bezogen auf die Form (1), und/oder ihrer Führungsbreite, bezogen auf die Form, veränderbar ist.

11. Vorrichtung nach Anspruch 10, dadurch gekennzeichnet, daß die Führung (8, 10, 14) eine Vielzahl von Führungsorganen (9), z.B. Führungsstifte, aufweist, welche zu den Fasern weisen.

12. Vorrichtung nach Anspruch 10 oder 11, dadurch gekennzeichnet, daß die Führung (14) um eine Achse, die normal zur Längserstreckung des Körpers angeordnet ist, drehbar ist.

13. Vorrichtung nach Anspruch 10, 11 oder 12, dadurch gekennzeichnet, daß die Führung mit zumindest zwei Teilen aufgebaut ist, die um einen gemeinsamen Drehpunkt bzw. Achse zueinander bzw. auseinander bewegbar sind.

14. Vorrichtung nach einem der Ansprüche 10 bis 13, dadurch gekennzeichnet, daß die Führung (10) in ihrer Winkellage, bezogen auf die Grundfläche (13) der Form, veränderbar ist.

Fig. 1

0216748

Fig. 2

0216748

Fig. 3

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | COMPOSITES, Band 25, Nr. 2, März/April 1985, Seiten 31-38, Paris, FR; L. DE GONCOURT et al.: "Une suspension automobile en composite" * Seite 32, Absätze 4,5; Seite 33, letzter Absatz; Seite 35, Absatz 7; Seite 37, Absätze 2-4; Figuren 19,23,24 * | 1-14 | B 29 C 53/62 B 29 C 53/80 // F 16 F 1/36 |
| A | GB-A-1 176 607 (SHELL) * Seite 1, Zeilen 10-12,65-83; Seite 2, Zeilen 78-83,112-130; Seite 3, Zeilen 1-7,44-50; Figuren 1,2 * | 1-12, 14 | |
| A | WO-A-8 400 351 (BOEING) * Seite 1, Zeilen 4-6; Seite 2, Zeile 17 - Seite 4, Zeile 12; Seite 5, Zeilen 1-14; Seite 9, Zeile 32 - Seite 10, Zeile 22; Figuren 1,6A,7A,7B * | 1,3-13 | RECHERCHIERTE SACHGEBIETE (Int. Cl.4) B 29 C F 16 F |
| E | EP-A-0 200 606 (VETROTEX) * Seite 1, Zeile 5 - Seite 2, Zeile 39; Seite 3, Zeilen 18-22; Seite 5, Zeilen 30-35; Seite 6, Zeilen 4,5; Figuren 1a,1b,5 * | 1,3-12 | |

-/-

Der vorliegende Recherchenbericht wurde für alle Patentansprüche erstellt.

| Recherchenort | Abschlußdatum der Recherche | Prüfer |
|---|---|---|
| DEN HAAG | 12-01-1987 | KUHN E.F.E. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENTS ABSTRACTS OF JAPAN, Band 8, Nr. 128 (M-302)[1565], 14. Juni 1984; & JP-A-59 29 829 (NITTO BOSEKI K.K.) 17-02-1984 --- | | |
| A | EP-A-0 110 254 (BASF) --- | | |
| A | EP-A-0 147 077 (FORD) --- | | |
| A,D | GB-A-2 100 835 (BUDD) ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 12-01-1987 | KUHN E.F.E. |